(19) Europäisches Patentamt
European Patent Office
Office européen des brevets

(11) **EP 4 598 038 A1**

(12) **EUROPEAN PATENT APPLICATION**
published in accordance with Art. 153(4) EPC

(43) Date of publication:
**06.08.2025 Bulletin 2025/32**

(21) Application number: **23875146.5**

(22) Date of filing: **26.09.2023**

(51) International Patent Classification (IPC):
**H04N 23/55** (2023.01)      **H04N 23/57** (2023.01)
**G03B 17/12** (2021.01)      **G03B 30/00** (2021.01)
**G02B 7/02** (2021.01)      **G02B 13/00** (2006.01)
**H04N 23/51** (2023.01)      **G03B 17/08** (2021.01)

(52) Cooperative Patent Classification (CPC):
**G02B 7/02; G02B 13/00; G03B 17/08; G03B 17/12;
G03B 30/00; H04N 23/51; H04N 23/55; H04N 23/57**

(86) International application number:
**PCT/KR2023/014799**

(87) International publication number:
**WO 2024/076080 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.10.2022   KR 20220128159
10.11.2022   KR 20220149761**

(71) Applicant: **Samsung Electronics Co., Ltd.**
**Suwon-si, Gyeonggi-do 16677 (KR)**

(72) Inventors:
• **KIM, Soojung**
  **Suwon-si Gyeonggi-do 16677 (KR)**
• **BAE, Jaecheol**
  **Suwon-si Gyeonggi-do 16677 (KR)**
• **KIM, Hyunho**
  **Suwon-si Gyeonggi-do 16677 (KR)**

(74) Representative: **HGF**
**HGF Limited
1 City Walk
Leeds LS11 9DX (GB)**

(54) **LENS ASSEMBLY AND ELECTRONIC DEVICE COMPRISING SAME**

(57)    According to an embodiment of the present disclosure, an electronic device comprises: a front plate; a display panel stacked on the back surface of the front plate and including at least one camera hole; and a camera module which includes: a lens barrel including a head portion protruding toward the front plate, an optical aperture surrounded by the head portion, and a protruding barrel space; and a plurality of lenses arranged with their optical axes aligned within the lens barrel. According to the present disclosure, a first lens may be disposed in the protruding barrel space, and the outer diameter including a rib of the first lens may be smaller than the outer diameter of the head portion of the lens barrel.

FIG. 8

EP 4 598 038 A1

## Description

[Technical Field]

An embodiment of the disclosure relates to, for example, a lens assembly and an electronic device including the same.

[Background Art]

The development of portable electronic devices is being applied to various fields closely related to daily life. Portable electronic devices are released in various sizes depending on the functions to be implemented and/or user preferences, and much research is being conducted to implement large screens to ensure visibility and enhance user convenience in operation. For example, to implement large screens, it is advantageous for electronic devices to have a wide area where a display is exposed outside. To achieve this, it may be important to miniaturize the size or structure of components that enclose the display (e.g., a bezel) and/or components arranged to overlap the display (e.g., a camera). The smaller the size or structure of components that enclose the display (e.g., a bezel) and/or overlap the display (e.g., a camera) is made, larger screens may be in electronic devices even if the electronic devices include displays of the same size. According to an embodiment, the smaller the size of the lens barrel of the camera module or the camera housing enclosing the camera module, the easier it may be to implement a large screen with a display.

Recently, the usage of cameras on portable electronic devices to take selfies has been increasing. Accordingly, while conventional electronic devices were sufficient with wide-angle (e.g., 90 degrees or less) capturing, they are now increasingly required to support ultra-wide-angle (e.g., exceeding 90 degrees) capturing to reflect consumer needs. However, typically, the wider the field of view ("FOV"), the larger the size of the lens barrel or the camera housing that encloses the camera module tends to become. This indicates that the technical challenge of implementing a wide FOV may have a trade-off relationship with the technical challenge of implementing a large screen.

To minimize the area where the camera is exposed to the outside through the front plate (e.g., window) of the electronic device, designs have been made to minimize the outer diameter of the camera module (e.g., reducing the wall thickness of the lens barrel). However, such designs may have limitations.

The above-described information may be provided as background technology for the purpose of aiding in the understanding of the disclosure. No claim or determination is made as to whether any of the foregoing may be applied as prior art with respect to the disclosure.

[Detailed Description of the Invention]

[Technical Solution]

An embodiment of the disclosure may provide an electronic device. The electronic device may include a front plate, a display panel laminated on the rear surface of the front plate and including at least one camera hole, and a camera module including a lens barrel including a head portion protruding toward the front plate, an optical opening surrounded by the head portion, and a plurality of lenses aligned along an optical axis within the lens barrel. Among the plurality of lenses included in the lens assembly, the first nearest lens from an object-side may be disposed within an optical aperture, and an outer diameter including a rib of the first nearest lens from the object-side may be smaller than the outer diameter of the head portion of the lens barrel.

An embodiment of the disclosure may provide an electronic device. The electronic device may include a front plate, a display panel laminated on the rear surface of the front plate and including at least one camera hole, and a camera module. The camera may include a lens barrel including a head portion protruding toward the front plate, an optical opening surrounded by the head portion, and a protruding barrel space, and a plurality of lenses aligned along an optical axis within the lens barrel. The first nearest lens from the object-side may be in contact with an inner surface of the lens barrel through a first contact point and a second contact point, and in contact with the second nearest lens from the object-side through a third contact point. The second nearest lens from the object-side may be in contact with the first nearest lens from the object-side through a fourth contact point, in contact with the inner surface of the lens barrel through a fifth contact point, and in contact with the third nearest lens from the object-side through a sixth contact point. The distances from the optical axis to the first contact point and the third contact point may each be smaller than the distance from the optical axis to the second contact point, the distance from the optical axis to the fourth contact point may be smaller than the distance from the optical axis to the second contact point, and the distance from the optical axis to the sixth contact point may be greater than the distance from the optical axis to the second contact point.

[Brief Description of Drawings]

The above-described aspects or other aspects, configurations, and/or advantages regarding an embodiment of the disclosure may become more apparent through the following detailed description made with reference to the accompanying drawings.

FIG. 1 is a front perspective view of an electronic device according to an embodiment of the disclosure.
FIG. 2 is a rear perspective view of the electronic device according to an embodiment of the disclosure.

FIG. 3 is an exploded perspective view of a front plate, a display panel, and an optical lens module according to an embodiment of the disclosure.

FIG. 4 is a view illustrating an electronic device including a front camera according to an embodiment.

FIG. 5 is a view illustrating an electronic device including a front camera according to an embodiment.

FIG. 6 is a view illustrating a camera module including a lens barrel with a miniaturized head portion and a plurality of lenses arranged within the lens barrel, according to an embodiment (first comparative embodiment).

FIG. 7 is a view illustrating a camera module including a lens barrel with a miniaturized head portion and a plurality of lenses arranged within the lens barrel, according to an embodiment (second comparative embodiment).

FIG. 8 is a view illustrating a camera module including a lens barrel with a miniaturized head portion and a plurality of lenses arranged within the lens barrel, according to an embodiment of the disclosure.

FIG. 9 is a view of the camera module illustrating an enlarged view of portion A of the embodiment in FIG. 8.

FIG. 10 is a view illustrating the arrangement relationship between a camera hole and a camera module according to an embodiment of the disclosure.

[Mode for Carrying out the Invention]

Hereinafter, various embodiments of the disclosure will be described with reference to the accompanying drawings.

The embodiments of the disclosure are provided to more fully describe the disclosure to those ordinarily skilled in the art, and the following embodiments may be modified in various other forms. The scope of the disclosure is not limited to the following embodiments. Rather, these embodiments are provided to make the disclosure more faithful and complete and to fully convey the spirit of the disclosure to those skilled in the art.

In the following drawings, the thickness or size of each layer is exaggerated or reduced for convenience and clarity of explanation, and the same reference numerals in the drawings denote the same elements. As used herein, the term "and/or" includes any one or more of the listed items and all combinations thereof.

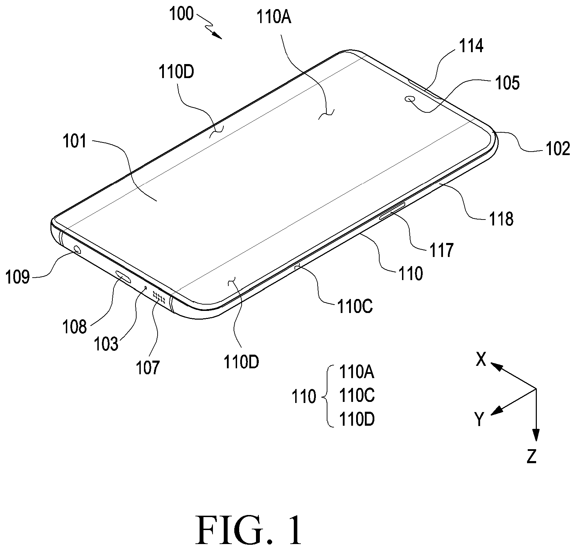

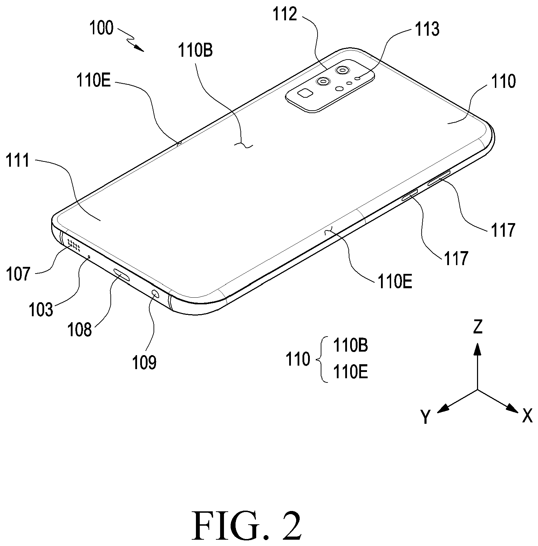

FIG. 1 is a front-side perspective view illustrating an electronic device 100 according to various embodiments. FIG. 2 is a rear-side perspective view illustrating the electronic device 100 according to various embodiments.

In the detailed description below, the longitudinal width direction of the electronic device 100 may be defined as the "Y direction", the lateral width direction may be defined as the "X direction", and/or the height direction may be defined as the "Z direction". In some embodiments, with respect to the direction in which a component is oriented, "negative/positive (-/+)" may be mentioned along with the orthogonal coordinate system illustrated in the drawings. For example, referring to FIGS. 1 and 2, "+Z direction" and "-Z direction" may be illustrated together to distinguish between a first direction in which a first surface 110A (or front surface) of the electronic device 100 is oriented and a second direction in which a second surface 110B (or rear surface) is oriented. In describing directions, when "negative/positive (-/+)" is not specified, it may be interpreted as including the positive direction unless otherwise defined. That is, "X direction" may be interpreted as including the +X direction, "Y direction" may be interpreted as including the +Y direction, and "Z direction" may be interpreted as including the +Z direction. In the description of the direction, the phrase "being oriented in an axis among three axes of the Cartesian coordinate system" may include "being oriented in a direction substantially parallel to the axis. It is noted that this is based on the Cartesian coordinate system indicated in the drawings for brevity of description, and the description of these directions or components does not limit various embodiments of the disclosure. In the following embodiments including the electronic device 100 and a camera module 105, 112, or 200, the term "optical axis direction" may refer to a direction parallel to the Z direction.

Referring to FIGS. 1 and 2, the electronic device 100 according to an embodiment may include a housing 110 including a front surface 110A, a rear surface 110B, and a side surface 110C surrounding the space between the front surface 110A and the rear surface 110B. In another embodiment (not illustrated), the term "housing 110" may refer to a structure defining some of the front surface 110A of FIG. 1, and the rear surface 110B and the side surface 110C of FIG. 2. According to an embodiment, at least a portion of the front surface 110A may be formed of a substantially transparent front plate 102 (e.g., a glass plate or a polymer plate including various coating layers) (which may be referred to as a "window member 102"). The rear surface 110B may be provided by the rear surface plate 111. The rear surface plate 111 may be made of, for example, glass, ceramic, polymer, metal (e.g., aluminum, stainless steel (STS), or magnesium), or a combination of two or more of these materials. The side surface 110C may be defined by a side surface bezel structure (or a "side surface member") 118 coupled to the front plate 102 and the rear surface plate 111 and including metal and/or polymer. In some embodiments, the rear surface plate 111 and the side surface bezel structure 118 may be configured integrally with each other and may include the same material (e.g., glass, a metal material such as aluminum, or ceramic).

In the illustrated embodiment, the front plate 102 may include, at the long opposite side edges thereof, two first edge areas 110D, which are bent from the front surface 110A toward the rear surface plate 111 and extend seamlessly. In the illustrated embodiment (see FIG. 2), the rear surface plate 111 may include, at the long opposite side edges thereof, two second edge areas 110E, which are bent from the rear surface 110B toward the front plate 102 and extend seamlessly. In some embodiments, the front plate 102 (or the rear surface plate 111) may include only one of the first edge areas 110D (or the second edge areas 110E). In another embodiment, some of the first edge areas 110D or the second edge areas 110E may not be included. In the above-described embodiments, when viewed from a side of the electronic device 100, the side surface bezel structure 118 may have a first thickness (or width) on the side where the first edge areas 110D or the second edge areas 110E are not included, and may have a second thickness, which is smaller than the first thickness, on the side where the first edge areas 110D or the second edge areas 110E are included.

According to an embodiment, the electronic device 100 may include at least one of a display panel 101, audio modules 103, 107, and 114, a sensor module, camera modules 105, 112, and 113, key input devices 117, and connector holes 108 and 109. In some embodiments, in the electronic device 100, at least one of the components (e.g., the connector hole 109) may be omitted, or other components may be additionally included.

According to an embodiment, the display panel 101 may be visually exposed through a substantial portion of, for example, the front plate 102. In some embodiments, at least a portion of the display panel 101 may be exposed through the front plate 102 defining the front surface 110A and the first edge areas 110D. In some embodiments, the edges of the display panel 101 may be configured to be substantially the same as the shape of the periphery of the front plate 102 adjacent thereto. In another embodiment (not illustrated), the distance between the periphery of the display panel 101 and the periphery of the front plate 102 may be substantially constant in order to increase the exposed area of the display panel 101.

According to an embodiment, a surface of the housing 110 (or the front plate 102) may include a screen display area provided as the display panel 101 is visually exposed. For example, the screen display area may include the front surface 110A and the first edge areas 110D.

In another embodiment (not illustrated), a portion of the screen display area (e.g., the front surface 110A and the first edge areas 110D) of the display panel 101 may be provided with a recess or an opening, and may include at least one of an audio module 114, a sensor module (not illustrated), a light-emitting element (not illustrated), and a camera module 105, which are aligned with the recess or the opening. In another embodiment (not illustrated), the rear surface of the screen display area of the display panel 101 may include at least one of an audio module 114, a sensor module (not illustrated), a camera module 105, a fingerprint sensor (not illustrated), and a light-emitting element (not illustrated).

In another embodiment (not illustrated), the display panel 101 may be coupled to or disposed adjacent to a touch-sensitive circuit, a pressure sensor capable of measuring a touch intensity (pressure), and/or a digitizer configured to detect a magnetic field-type stylus pen.

In some embodiments, at least some of the key input devices 117 may be disposed in the first edge areas 110D and/or the second edge areas 110E.

According to an embodiment, the audio modules 103, 107, and 114 may include, for example, a microphone hole 103 and speaker holes 107 and 114. The microphone hole 103 may include a microphone disposed therein to acquire external sound, and in some embodiments, a plurality of microphones may be disposed therein to be able to detect the direction of sound. The speaker holes 107 and 114 may include an external speaker hole 107 and a communication receiver hole 114. In some embodiments, the speaker holes 107 and 114 and the microphone hole 103 may be implemented as a single hole, or a speaker may be included without the speaker holes 107 and 114 (e.g., a piezo speaker). The audio modules 103, 107, and 114 are not limited to the above-described structure, and various design changes may be made, such as mounting only some audio modules or adding a new audio module, depending on the structure of the electronic device 100.

According to an embodiment, the sensor module (not illustrated) may generate, for example, an electrical signal or a data value corresponding to an internal operating state or an external environmental state of the electronic device 100. The sensor modules (not illustrated) may include, for example, a first sensor module (not illustrated) (e.g., a proximity sensor) and/or a second sensor module (not illustrated) (e.g., a fingerprint sensor) disposed on the front surface 110A of the housing 110, and/or a third sensor module (not illustrated) (e.g., an HRM sensor) and/or a fourth sensor module (not illustrated) (e.g., a fingerprint sensor) disposed on the rear surface 110B of the housing 110. In some embodiments (not illustrated), the fingerprint sensor may be disposed not only on the front surface 110A (e.g., the display panel 101) of the housing 110, but also on the rear surface 110B. The electronic device 100 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (not illustrated). The sensor modules (not illustrated) are not limited to the above-described structure, and various design changes such as mounting only some of the sensor modules and adding new sensor modules may be made depending on the structure of the electronic device 100.

According to an embodiment, the camera modules 105, 112, and 113 may include, for example, a front camera module 105 disposed on the front surface 110A of the electronic device 100, a rear camera module 112 disposed on the rear surface 110B, and/or a flash 113. The camera modules 105 and 112 may include one or more lenses, an image sensor, and/or an image signal processor. The flash 113 may include, for example, a light-emitting diode or a xenon lamp. In some embodiments, two or more lenses (e.g., an infrared camera, a wide-angle lens, and a telephoto lens), and image sensors may be arranged on one surface of the electronic device 100. The camera modules 105, 112, and 113 are not limited to the above-described structure, and various design changes such as mounting only some of the camera modules and adding new camera modules may be made depending on the structure of the electronic device 100.

According to an embodiment, the electronic device 100 may include a plurality of camera modules (e.g., a dual camera or a triple camera) having different properties (e.g., FOVs) or functions, respectively. For example, the plurality of camera modules 105 and 112 including lenses having different fields of view may be configured, and the electronic device 100 may control the change of the FOVs of the camera modules 105 and 112 executed therein based on a user's selection. For example, at least one of the plurality of camera modules 105 and 112 may be a wide-angle camera, and at least one of other camera modules may be a telephoto camera. In addition, the plurality of camera modules 105 and 112 may include at least one of a wide-angle camera, an ultra-wide-angle camera, a macro camera, a telephoto camera, or an infrared (IR) camera (e.g., a time-of-flight (TOF) camera, or a structured light camera). According to an embodiment, the IR camera may be operated as at least a part of a sensor module. For example, the TOF camera may be operated as at least a part of a sensor module (not illustrated) for detecting a distance to an object.

According to an embodiment, the key input devices 117 may be disposed on the side surface 110C of the housing 110. In another embodiment, the electronic device 100 may not include some or all of the above-mentioned key input devices 117, and the key input devices 117, which are not included in the electronic device 101, may be implemented in another form, such as soft keys, on the display panel 101. In some embodiments, a key input device may include a sensor module (not illustrated) disposed on the rear surface 110B of the housing 110.

According to an embodiment, the light-emitting element (not illustrated) may be disposed on, for example, the front surface 110A of the housing 110. The light-emitting element (not illustrated) may provide, for example, the state information of the electronic device 100 in an optical form. In another embodiment, the light-emitting element (not illustrated) may provide a light source that is interlocked with, for example, the operation of the front camera module 105. The light-emitting element (not illustrated) may include, for example, an LED, an IR LED, and/or a xenon lamp.

According to an embodiment, the connector holes 108 and 109 may include, for example, a first connector hole 108 capable of accommodating a connector (e.g., a USB connector) configured to transmit/receive power and/or data to/from an external electronic device, and a second connector hole (e.g., an earphone jack) 109 capable of accommodating a connector configured to transmit/receive an audio signal to/from an external electronic device. The connector holes 108 and 109 are not limited to the above-described structure, and various design changes such as providing only some of the connector holes and adding new connector holes may be made depending on the structure of the electronic device 100.

The electronic device according to an embodiment of the disclosure has a bar-type or plate-type appearance, but the disclosure is not limited thereto. For example, the illustrated electronic device may be a part of a rollable electronic device, a slidable electronic device, or a foldable electronic device.

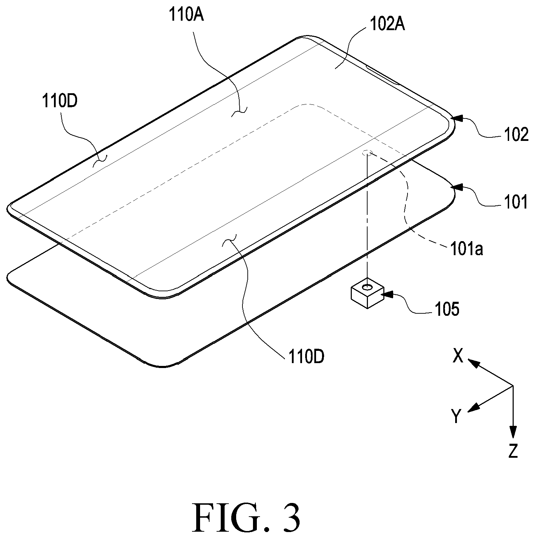

Hereinafter, an electronic device including an under-display camera (hereinafter referred to as "UDC") according to an embodiment of the disclosure will be described with reference to the embodiments illustrated in FIGS. 3 to 5.

According to an embodiment, the camera modules 105, 112, and 113 may be exemplified by describing "camera module 105" disposed to face the front plate 102. In describing camera modules 105, 112, and 113, a description is made with reference to the front camera module 105 of FIG. 1, but this is for convenience of description. It is to be noted that the description may also be applied to the description of the rear camera modules 112 and 113.

FIG. 3 is an exploded perspective view of a front plate 102, a display panel 101, and a camera module 105 according to an embodiment of the disclosure.

According to an embodiment, at least a portion of the front plate 102 may be made of a substantially transparent material. For example, at least a portion of the front plate 102 may be made of a glass plate or a polymer plate including various coating layers. According to an embodiment, the display panel 101 may be exposed through a substantial portion 102A of the front plate 102 such that a screen displayed on the display is visually recognizable from the outside.

According to an embodiment, a polarization layer (not illustrated) may be further included between the front plate 102 and the display panel 101. The polarization layer (not illustrated) may allow only light of a specific wavelength to pass therethrough from the screen displayed on the display panel 101 or the amount of light incident on the display panel 101.

According to an embodiment, the camera module 105 and/or a sensor module (not illustrated) may be disposed in the inner space of the electronic device 100 to be exposed to the external environment through a predetermined area of the display panel 101 and the front plate 102. For example, the predetermined area may be an area in the display panel 101 in which the number of pixels is smaller than that of other areas adjacent to the predetermined area. According to an embodiment, when viewed from above the display panel 101, at least a portion of the predetermined area may overlap the camera module 105 and/or the sensor module. Here, when it is described that the camera module 105 overlaps at least a portion of the predetermined area, it may mean that the FOV of the camera module 105 corresponds to the predetermined area. As another embodiment, some sensor modules may be arranged in the inner space of the electronic device to implement the functions thereof without being visually exposed through the front plate 102.

According to an embodiment, the display panel 101 may include a camera hole 101a. According to an embodiment, the camera hole 101a may be provided in a predetermined area having a smaller number of pixels than other adjacent areas. According to an embodiment, the camera hole 101a may be formed by perforating at least a portion of the display panel 101. According to an embodiment, a portion of the display panel 101 may be perforated, and the perforated portion may be covered with the front plate 102.

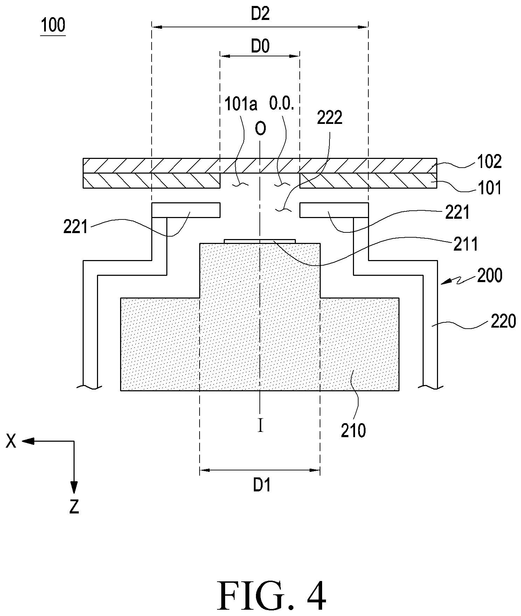

According to some embodiments, the camera hole 101a may be configured as a physically empty portion, such as a cavity, a groove, and a recess, without being filled with any component. However, the disclosure is not necessarily limited thereto, and may only refer to a predetermined area in which the number of pixels is smaller than that of the surrounding area. In an electronic device including a UDC, the camera hole 101a may be provided in a form that is visually indistinguishable from other adjacent areas. The camera hole 101a may have a predetermined diameter and may be provided at a position corresponding to the lens assembly included in the camera module 105. According to an embodiment, during manufacturing of the electronic device 100, the camera hole 101a provided in the display panel 101 may be aligned with the plurality of lenses of the camera module 105 along the optical axis (hereinafter, the optical axis O-I in FIG. 4 described later) in the assembly process of individual components.

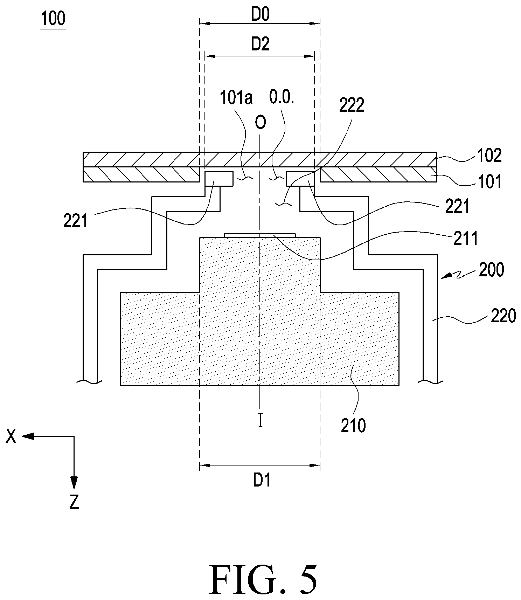

FIG. 4 is a view illustrating an electronic device including a front camera according to an embodiment. FIG. 5 is a view illustrating an electronic device including a front camera according to an embodiment. FIGS. 4 and 5 may illustrate a state in which a plurality of lenses 210 of the camera module 200 and the camera hole 101a are aligned along the optical axis O-I.

Referring to FIGS. 4 and 5, the camera module 200 may include a plurality of lenses 210 aligned along the optical axis O-I and a lens barrel 220 at least partially enclosing the plurality of lenses 210. The lens barrel 220 may include a head portion 221 located at the end portion of the lens barrel 220 and an optical opening (O.O.) surrounded by the head portion 221. The head portion 221 may protrude toward the front plate 102 and/or the display panel 101. The camera module 200 may include a barrel space 222 provided by the lens barrel 220 protruding on one side. Here, the barrel space 222 may refer to the optical opening (O.O.) and a space provided on the rear surface of the head portion 221 that forms the optical opening (O.O.). At least one lens may be accommodated in the barrel space 222.

The embodiment of FIG. 5 illustrates that the head portion 221 further protrudes from one side of the lens barrel 220 toward the front plate 102 and/or the display panel 101 and is at least partially inserted into the camera hole 101a. The embodiment of FIG. 5 may further include a protruding barrel space 223, which extends from the barrel space 222 toward the front plate 102 and/or the display panel 101. Although the barrel space 222 and the protruding barrel space 223 are not physically separated, for convenience of explanation, the barrel space 222 and the protruding barrel space 223 may be described as being divided based on the imaginary line IL. According to an embodiment, the barrel space 222 may be referred to as a first barrel space 222, and the protruding barrel space 223 may be referred to as a second barrel space 223. In the camera module 200 of the embodiment of FIG. 5, the protruding barrel space 223 may be provided as the head portion 221 is at least partially accommodated in the camera hole 101a. At this time, the size of the protruding barrel space 223 may be proportional to the height of the head portion 221, so that the greater the height of the head portion 221, the larger the size of the protruding barrel space 223, and the smaller the height of the head portion 221, the smaller the size of the protruding barrel space 223.

The embodiment of FIG. 4 illustrates that the optical opening (O.O.) is aligned with the camera hole 101a and the optical axis O-I while the head portion 221 of the lens barrel 220 is spaced apart from the camera hole 101a. In contrast, the embodiment of FIG. 5 illustrates that the optical opening (O.O.) is aligned with the camera hole 101a and the optical axis O-I while the head portion 221 of the lens barrel 220 is at least partially accommodated in the camera hole 101a. According to an embodiment, in the embodiment of FIG. 5, the optical opening (O.O.) and the camera hole 101a may have substantially the same height along the Z-direction when the height is measured from one side of the lens barrel 220.

According to an embodiment, the camera module 200 may have an optical axis O-I extending from the object (or external subject) side O to the image-side I. In the following description of each lens configuration, for example, the object-side may refer to the direction where an object O is located, and the image-side may refer to the direction where an image I is formed on the image plane. In addition, the "surface facing the object-side" of a lens may refer to the surface on the side where the object O is located with respect to the optical axis O-I and may indicate the front surface of the lens in the drawings according to an embodiment of the disclosure. Similarly, the "surface facing the image-side" may refer to the surface on the side where the image plane is located with respect to the optical axis O-I and may indicate the rear surface of the lens in the drawings. Here, the image plane may refer to a location where an imaging element or imaging sensor is placed to form an image. According to an embodiment, with respect to at least one of the plurality of lenses included in the camera module 200, viewing the object-side O along the optical axis O-I may be defined as "being oriented in a first direction", and viewing the image-side I along the optical axis O-I may be defined as "being oriented in a second direction". According to an embodiment, when a lens (e.g., the first lens) includes a surface facing the subject side O, it may be said that the surface facing the object-side O is oriented in the first direction. In addition, when a lens (e.g., the first lens L1) includes a surface facing the image-side I, it may be said that the surface facing the image-side I is oriented in a second direction.

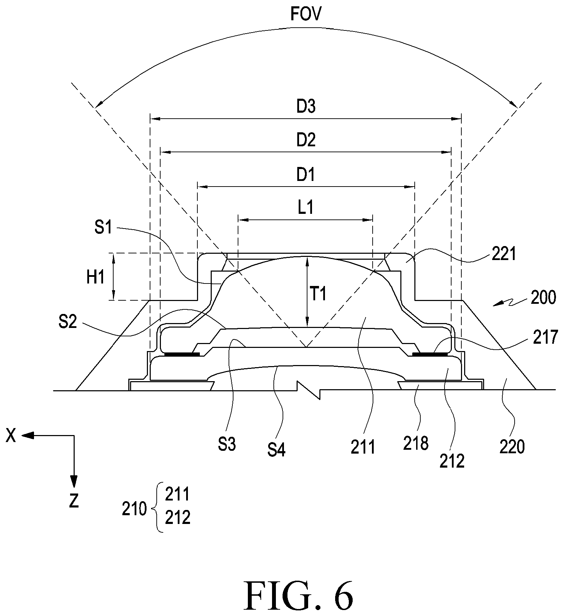

The plurality of lenses 210 may be arranged in a state aligned with the image sensor and/or the camera hole 101a along the optical axis O-I. Here, the description that the plurality of lenses 210, the image sensor, and/or the camera hole 101a are aligned along the optical axis O-I" may mean that the centers of the plurality of lenses 210, the center of the image sensor, and/or the center of the camera hole 101a are positioned on the optical axis O-I. The alignment along the optical axis O-I may be achieved by performing a vision alignment operation during the process of assembling the camera module 200 into the electronic device 100. Referring to FIG. 6 and the subsequent drawings described below, at least two lenses are illustrated to be aligned along the optical axis O-I. However, this is merely one embodiment and does not limit the scope of the rights of the disclosure.

In the state in which the plurality of lenses 210 are aligned along the optical axis O-I, the FOV of the camera module 200 may be determined by factors such as the diameter D1 of the first lens 211 from the object-side O among the plurality of lenses 210, the diameter D2 of the head portion 221, and/or the diameter D0 of the camera hole 101a. In addition, factors for determining the FOV of the camera module 200 may further include factors such as the distance between the first lens 211 from the object-side O and the head portion 221, and/or the distance between the first lens 211 from the object-side O and the camera hole 101a.

For example, the electronic device 100 according to the embodiment illustrated in FIG. 4 is an example of a front camera and may disclose a camera module 200 in which the head portion 221 of the lens barrel 220 is aligned with the camera hole 101a of the display panel 101 along the optical axis O-I while being spaced apart by a predetermined distance from the display panel 101. However, in the electronic device 100 according to the embodiment illustrated in FIG. 4, it may be difficult to secure a wide FOV because the distance between the camera hole 101a and the first lens 211 from the object-side O is long.

In contrast, the electronic device 100 according to the embodiment illustrated in FIG. 5 is another example of a front camera and may disclose a camera module 200 in which the head portion 221 of the lens barrel 220 is aligned with the camera hole 101a of the display panel 101 along the optical axis O-I while being at least partially accommodated in the camera hole 101a of the display panel 101. In the electronic device 100 according to the embodiment illustrated in FIG. 5, the head portion 221 of the lens barrel 220 may be located inside the camera hole 101a, allowing the distance between the camera hole 101a and the first lens 211 from the object-side O to be designed closer, which may make it easier to ensure a relatively wide FOV.

Referring to FIG. 5, the head portion 221 may be have a predetermined height H1 from one side of the lens barrel 220. The height H1 of the head portion 221 may be configured in consideration of factors such as the depth of the camera hole 101a and the distance between the lens barrel 220 and the display panel 101. For example, the height H1 of the head portion 221 may be designed to be greater than the depth of the camera hole 101a, and may also be designed with a predetermined tolerance to ensure that the display panel 101 and the lens barrel 220 do not come into contact with each other. Alternatively, according to an embodiment, a damper (not illustrated) for shock absorption may be provided between the camera module 200 and the display panel 101, and the height H1 of the head portion 221 may be designed by additionally considering the position and/or height of the damper.

Currently, in the embodiments illustrated in FIGS. 4 and 5, only the first lens 211 from the object-side O among the plurality of lenses 210 is illustrated. However, it is to be noted that the shapes of respective lenses included in the plurality of lenses 210 and their arrangement within the lens barrel 220 in the embodiments illustrated in FIGS. 4 and 5 may vary depending on the embodiment. For example, in the embodiments of FIGS. 4 and 5, it is to be noted that the position of the first lens 211 from the object-side O may be configured differently from what is illustrated as follows: the first lens may be located closer to or farther from the camera hole 101a, and, during the operation of the electronic device 100, the relative position of the first lens 211 relative to the camera hole 101a may vary depending on the auto-focusing (AF) operation of the camera module 300.

According to an embodiment, miniaturizing the head portion 221 of the lens barrel 220 and designing the plurality of lenses 210 based on the miniaturized head portion 221 may be advantageous in ensuring the FOV required for the camera module 200 while reducing the size of the camera hole 101a in the electronic device 100 that includes a front camera.

Regarding the camera module 200, which includes the lens barrel 220 with the miniaturized head portion 221 and the plurality of lenses 210 arranged within the lens barrel 220, various examples illustrated in FIGS. 6 to 10 will be described in detail below. Hereinafter, FIGS. 6 to 10 may be described based on the state in which the head portion 221 of the lens barrel 220, as described in the embodiment of FIG. 5, is at least partially accommodated in the camera hole 101a of the display panel 101. At this time, FIGS. 6 to 10 may be described assuming that a head portion 221 with substantially the same height H1 is included. In addition, FIGS. 6 to 10 may be described based on the state in which at least one lens is arranged inside the protruding barrel space 223 of the lens barrel 220, as described above in the embodiment of FIG. 5.

When describing the embodiments of FIGS. 6 to 10, the image sensor (not illustrated) may be omitted. The image sensor (not illustrated) may be included within the camera housing of the camera module 200 or may be mounted in the electronic device 100 where the camera module 200 is mounted. According to an embodiment, the image sensor (not illustrated) is a sensor mounted on a circuit board (not illustrated) and arranged while being aligned with an optical axis O-I, and may be configured to respond to light. The image sensor (not illustrated) may include, for example, sensors such as a complementary metal-oxide semiconductor (CMOS) image sensor or a charge-coupled device (CCD). Without being limited to these, the image sensor may include various elements configured to convert, for example, an object image, into an electric image signal. The image sensor (not illustrated) may detect luminance information, gradation ratio information, color information, and the like for the object from the light passing through the plurality of lenses 210 to acquire an image of the object.

According to an embodiment of the disclosure, the lens barrel 220 may be provided to at least partially surround plurality of lenses 210, a film mask 217, and/or a spacer 218. The lens barrel 220 may serve to stably seat the plurality of lenses 210, the film mask 217, and/or the spacer 218, block external light, protect the electronic device 100 from the drop, and prevent the ingress of foreign substances into the electronic device 100.

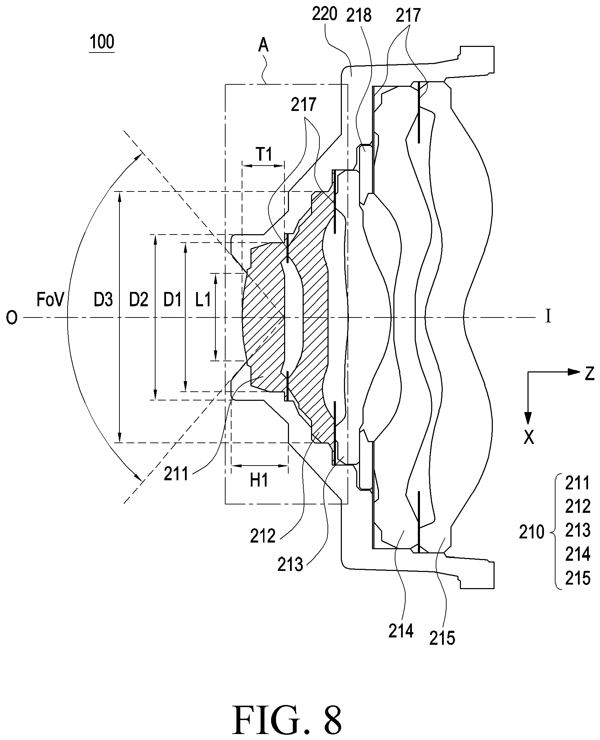

According to an embodiment of the disclosure, the plurality of lenses 210 may include, for example, plurality of lenses sequentially arranged in the direction of the optical axis O-I (e.g., the direction from the object-side O to the image-side I, as illustrated in FIG. 4 and/or FIG. 5). The plurality of lenses may include the first nearest lens from the object-side O (i.e., a first lens 211), and the second nearest lens from the object-side O (i.e., a second lens 212). Depending on the embodiment, the plurality of lenses 210 may include an additional lens, for example, the third nearest lens from the object-side O (i.e., a third lens 213) (e.g., the third lens 213 in FIG. 8). According to another embodiment, the plurality of lenses 210 may include the fourth nearest lens from the object-side O (i.e., a fourth lens 214) (e.g., the fourth lens 214 in FIG. 8). According to yet another embodiment, the plurality of lenses 210 may include the fifth nearest lens from the object-side O (i.e., a fifth lens) (e.g., the fifth lens 215 in FIG. 8). Here, the first lens 211 includes a surface S1 facing the object-side and a surface S2 facing the image-side. According to an embodiment, a portion of the surface S1 facing the object-side may be exposed to the outside through the optical opening (O.O.) of the lens barrel 220. The second lens 212 may include a surface S3 facing the object-side and a surface S4 facing the image-side. In addition, the third lens 213, the fourth lens 214, and the fifth lens 215 may also each include a surface facing the object-side and a surface facing the image-side. However, specific descriptions of these are omitted.

In describing the plurality of lenses 210 according to an embodiment, the portion closer to the optical axis O-I in each lens may be referred to as a "chief portion", while the portion farther from the optical axis O-I (or near the edge of the lens) may be referred to as a "marginal portion". The chief portion, for example, may be the portion of the first lens 211 that intersects the optical axis O-I. The marginal portion, for example, may be the portion of the first lens 211 that is spaced a certain distance from the optical axis. The marginal portion may include, for example, an end portion of the lens farthest from the optical axis O-I of the lens. In the disclosure, the marginal portion of a lens included in the plurality of lenses 210 may correspond to the non-effective diameter of the lens and may be referred to as a "rib (or flange)" in the following description. Here, the non-effective diameter of a lens may refer to the portion of the lens that does not correspond to the effective diameter. The effective diameter of a lens refers to the distance, in a direction perpendicular to the optical axis O-I, from the center of the lens to the substantial area of the lens through which light rays pass. The non-effective diameter of the lens may refer to the remaining portion of the lens that extends from the end portion of the effective diameter of the lens to the lens barrel. In the embodiments of FIGS. 6 to 8 below, the effective diameter L1 of the first lens 211 is illustrated, and for better understanding of the embodiments, the effective diameter L1 of the first lens 211 is assumed to have the same diameter in all cases. In describing the embodiments of FIGS. 6 to 10 below, each component of the camera module 200, which includes the plurality of lenses 210 and the lens barrel 220, is bilaterally symmetric with respect to the optical axis O-I passing through the chief portions of the lenses. Thus, the description for one side with respect to the optical axis O-I may be applied to the other side with respect to the optical axis O-I.

FIG. 6 is a view illustrating a camera module including a lens barrel with a miniaturized head portion and a plurality of lenses arranged within the lens barrel, according to an embodiment (first comparative embodiment).

In FIG. 6, for convenience of description, only a portion of the lens barrel 220 surrounding the first lens 211 and the second lens 212 may be illustrated.

The camera module 200 including the miniaturized head portion 221 according to an embodiment (the first comparative embodiment) may reduce the size of the head portion 221 by applying a structure in which the rib of the first lens 211 extends further toward the second lens 212 than the effective diameter portion of the second surface S2 of the first lens 211 and is seated on the non-effective diameter portion of the first surface S3 of the second lens 212, while ensuring the center thickness T1 of the first lens 211.

In the camera module 200 including the miniaturized head portion 221 according to an embodiment (the first comparative embodiment), only the first lens 211 may be disposed within the protruding barrel space 223. At this time, the outer diameter D1 of the first lens 211 may be greater than the outer diameter D2 of the head portion 221 of the lens barrel 220 (D2 < D1).

The camera module 200 including the miniaturized head portion 221 according to an embodiment (the first comparative embodiment) may include elements expressed by the following Equation 1, Equation 2, and Equation 3, where the outermost diameter including the rib of the first lens 211 is D1, the outermost diameter of the head portion 221 of the lens barrel 220 is D2, the outermost diameter including the rib of the second lens 212 is D3, the height of a portion protruding to one side from the lens barrel 220, that is, the head portion 221, is H1, and the center thickness of the first lens 211 is T1.

$$[\text{Equation 1}]$$
$$D2 < D1 < D3$$

$$[\text{Equation 2}]$$
$$H1 < T1$$

$$[\text{Equation 3}]$$
$$FOV < 90$$

The camera module 200 including the miniaturized head portion 221 according to an embodiment (the first comparative embodiment) may reduce the size of the head portion 221 by applying a structure in which the rib of the first lens 211 is seated on the non-effective diameter portion of the first surface S3 of the second lens 212 while only the first lens 211 is disposed within the protruding barrel space 223. At this time, the relationship among the outermost diameter D1 including the rib of the first lens 211, the outermost diameter D2 of the head portion 221 of the lens barrel 220, and the outermost diameter D3 including the rib of the second lens 212 may satisfy the above Equation 1.

The camera module 200 including the miniaturized head portion 221 according to an embodiment (the first comparative embodiment) may have the disadvantage in that, as the outermost diameter D1 of the first lens 211, i.e., the rib, increases, the technical complexity rises, the moldability by a mold deteriorates, and manufacturing costs increase. In addition, the camera module 200 including the miniaturized head portion 221 according to an embodiment (the first comparative embodiment) may have a structure in which the rib and the portion leading to the rib are thinner compared to the center thickness T1 of the first lens 211, which may lead to difficulties in ensuring impact resistance and optical performance. Moreover, the camera module 200 including the miniaturized head portion 221 according to an embodiment (the first comparative embodiment) may require the center thickness T1 of the first lens 211 to be greater than the height H1 of the protruding portion of the lens barrel 220, i.e., the head portion 221, for stability in injection molding, which may limit its application to wide-angle cameras with an FOV of 90 degrees or less.

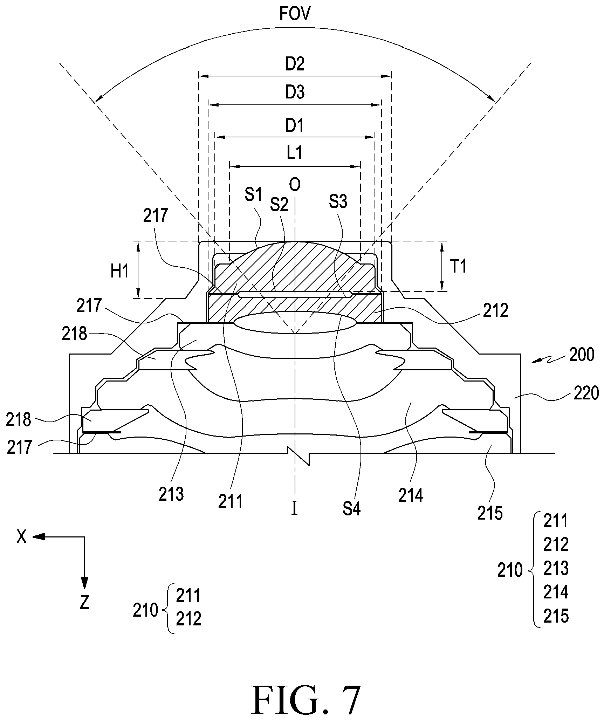

FIG. 7 is a view illustrating a camera module including a lens barrel 220 with a miniaturized head portion and plurality of lenses 210 arranged within the lens barrel 220, according to an embodiment (second comparative embodiment).

The camera module 200 including the miniaturized head portion 221 according to an embodiment (the second comparative embodiment) may minimize an air gap between the first lens 211 and the second lens 212, as well as the outer diameters D1 and D3 of the first lens 211 and the second lens 212, and may form the rib lengths of the first lens 211 and the second lens 212 as short as possible.

The camera module 200 including the miniaturized head portion 221 according to an embodiment (the second comparative embodiment) may have both the first lens 211 and the second lens 212 disposed within the protruding barrel space 223. At this time, the outer diameter D1 of the first lens 211 may be smaller than the outer diameter D2 of the head portion 221 of the lens barrel 220 (D1 < D2), and the outer diameter D3 of the second lens 212 may also be smaller than the outer diameter D2 of the head portion 221 of the lens barrel 220 (D3 < D2).

The camera module 200 including the miniaturized head portion 221 according to an embodiment (the second comparative embodiment) may include elements expressed by the following Equation 4, Equation 5, and Equation 6, where the outermost diameter including the rib of the first lens 211 is D1, the outermost diameter of the head portion 221 of the lens barrel 220 is D2, the outermost diameter including the rib of the second lens 212 is D3, the height of a portion protruding to one side from the lens barrel 220, that is, the head portion 221, is H1, and the center thickness of the first lens 211 is T1.

$$[\text{Equation 4}]$$
$$D1 < D3 < D2$$

[Equation 5]

$$T1 < H1$$

[Equation 6]

$$FOV < 90$$

The camera module 200 including the miniaturized head portion 221 according to an embodiment (the second comparative embodiment) may reduce the size of the head portion 221 by minimizing the air gap between the first lens 211 and the second lens 212, as well as the outer diameters D1 and D3 of the first lens 211 and the second lens 212, and by arranging the first lens 211 and the second lens 212 within the protruding barrel space 223. At this time, the relationship among the outermost diameter D1 including the rib of the first lens 211, the outermost diameter D2 of the head portion 221 of the lens barrel 220, and the outermost diameter D3 including the rib of the second lens 212 may satisfy the above Equation 4.

The camera module 200 including the miniaturized head portion 221 according to an embodiment (the second comparative embodiment) may be restricted in optical design conditions, such as configuring the effective diameters of the first lens 211 and the second lens 212 similarly and reducing the air gap between the first lens 211 and the second lens 212. When the camera module 200 including the miniaturized head portion 221 according to an embodiment (the second comparative embodiment) is used as an ultra-wide-angle camera, the distance from the starting point of the FOV to the top portion of the barrel, i.e., the head portion 221, becomes smaller compared to the previously examined embodiment (the first comparative embodiment). Thus, for design stability, it may become necessary to add a lens within the protruding barrel space 223. Therefore, the cost associated with adding the lens to the camera module 200 or the aspect of controlling optical performance may be disadvantageous compared to other embodiments (e.g., the first comparative embodiment). **In** addition, the camera module 200 including the miniaturized head portion 221 according to an embodiment (the second comparative embodiment) may have limitations in that the camera module is applicable only to wide-angle cameras with an FOV of 90 degrees or less, similar to the previously discussed embodiment (the first comparative embodiment).

FIG. 8 is a view illustrating a camera module 200 including a lens barrel 220 with a miniaturized head portion and plurality of lenses 210 arranged within the lens barrel 220, according to an embodiment of the disclosure.

According to the embodiment of FIG. 8, the first nearest lens from the object-side O (e.g., the first lens 211) among the plurality of lenses 210 included in the camera module 200 may be disposed within the protruding barrel space (e.g., the protruding barrel space 223 in FIG. 5). At this time, the second nearest lens from the object-side O (e.g., the second lens 212) may not be disposed within the protruding barrel space 223. The second nearest lens from the object-side O (e.g., the second lens 212) may be located outside the protruding barrel space 223 (at a position adjacent to the protruding barrel space 223 within the lens barrel 220). In addition, the outer diameter D1, including the rib of the first nearest lens from the object-side O (e.g., the first lens 211), may be smaller than the outer diameter D2 of the head portion 221 of the lens barrel 220. Moreover, the outer diameter D2 of the head portion 221 of the lens barrel 220 may be smaller than the outer diameter D3, including the rib of the second nearest lens from the object-side O (e.g., the second lens 212).

The camera module 200 including the miniaturized head portion 221 according to an embodiment of the disclosure may include elements expressed by the following Equation 7, Equation 8, and Equation 9, where the outermost diameter including the rib of the first lens 211 is D1, the outermost diameter of the head portion 221 of the lens barrel 220 is D2, the outermost diameter including the rib of the second lens 212 is D3, the height of a portion protruding to one side from the lens barrel 220, that is, the head portion 221, is H1, and the center thickness of the first lens 211 is T1.

[Equation 7]

$$D1 < D2 < D3$$

[Equation 8]

$$T1 < H1$$

[Equation 9]

$$90 < FOV$$

According to an embodiment of the disclosure, by designing the outer diameter D1 of the first lens 211 as close as possible to the effective diameter L1, the rib of the first lens 211 may have a very short length. According to an embodiment of the disclosure, by disposing only the first lens 211 within the protruding barrel space 223, the miniaturization of the head portion 221 is possible. Unlike the embodiment illustrated in FIG. 6 (the first comparative embodiment), in which the rib of the first lens 211 is seated on the first surface S3 of the second lens 212 at a point beyond the outer diameter D2 of the head portion 221 and the protruding barrel space 223, in the embodiment illustrated in FIG. 8, the entire first lens 211 may be disposed within the protruding barrel space 223. In addition, the outermost diameter D3 of the second lens 212 may be greater than the outer diameter D2 of the head portion 221 such that the second lens 212 can be stably seated on the third lens 213. The second lens 212 may have a rib shape that includes an end portion abutting the inner surface of the lens barrel 220 from the starting point of the non-effective diameter, where both the first surface S3 and the second surface S4 of the second lens 212 are formed overall in the shape of a gently sloping hill (or ridge) inclined toward the object-side O (in the first direction).

According to embodiments of the disclosure illustrated in FIG. 8 and the subsequent drawings, compared to the previously discussed embodiment (the first embodiment), the design of the center thickness of the first lens 211 may be more flexible (e.g., the thickness T1 may be smaller than the height H1 of the head portion 221), and a stable structure ensuring moldability and impact resistance may be achieved. Furthermore, according to an embodiment of the disclosure, the advantage of implementing an ultra-wide FOV (e.g., about 100 degrees or more) may be achieved. In addition, compared to the previously discussed embodiment (the second embodiment), there may be no constraints on the effective diameters of the first lens 211 and the second lens 212, nor on the air gap between the first lens 211 and the second lens 212. Even if the distance from the starting point of the FOV to the head portion 221 is shortened, it is possible to provide a camera module 200 that implements an ultra-wide FOV (e.g., about 100 degrees or more) using a minimum number of plurality of lenses.

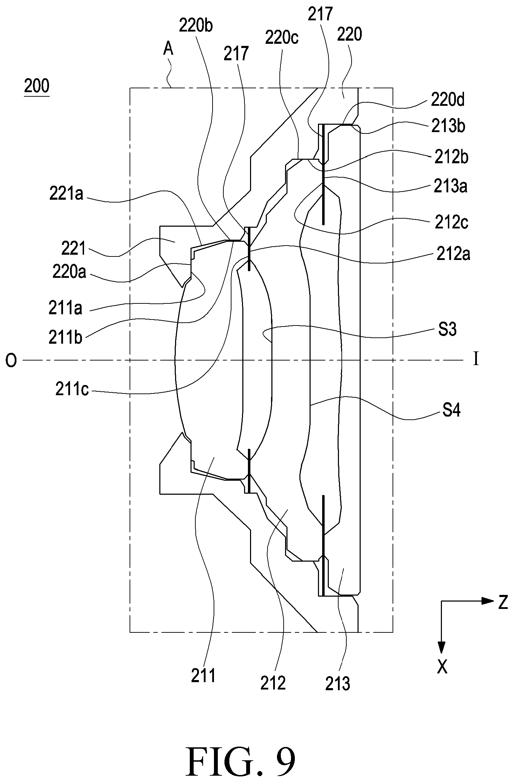

FIG. 9 is a view of the camera module illustrating an enlarged view of portion A of the embodiment in FIG. 8. With reference to FIG. 9, the components and arrangement of the first lens 211 and the second lens 212 of the disclosure will be described in more detail.

According to an embodiment, the first lens 211 may be in contact with the inner surface of the lens barrel 220 through a first contact point 211a and a second contact point 211b, and in contact with the second lens 212 through a third contact point 211c. Here, the second contact point 211b may be formed at the greatest outer diameter of the first lens 211. With reference to FIG. 9, the inner surface of the lens barrel 220 may have a shape corresponding to the assembly of the plurality of lenses. For example, the inner surface of the lens barrel 220 of the disclosure may include a first portion 220a corresponding to the miniaturized head portion 221, a second portion 220b in contact with the rib of the first lens 211, a third portion 220c in contact with the rib of the second lens 212, and a fourth portion 220d in contact with the rib of the third lens 213. As illustrated in FIG. 9, the inner surface of the lens barrel 220 may have an inner surface structure in which a plurality of stepped portions and a plurality of sloped portions are combined. The shape of the inner surface of the lens barrel 220 may vary slightly depending on the embodiment. According to an embodiment, the inner surface of the lens barrel 220 may include a first portion 220a and a second portion 220b at different positions, and the first portion 220a and the second portion 220b may be oriented in different directions. For example, the first portion 220a may be located on the inner surface (or rear surface) of the head portion 221 and may be oriented in the Z direction. The second portion 220b may be located at a position spaced apart from the head portion 221 and may be oriented in a direction substantially perpendicular to the Z direction (e.g., the X direction). According to an embodiment, the lens barrel 220 may further include a middle portion 221a between the first portion 220a and the second portion 220b. The middle portion 221a, which has a small thickness in the portion that leads to the head portion 221 from the lens barrel 220, may be made thicker to improve durability. According to an embodiment, the middle portion 221a may slope relative to the first portion 220a and the second portion 220b.

According to an embodiment, the inner surface of the lens barrel 220 may be in contact with the first contact point 211a and the second contact point 211b of the first lens 211 at two portions 220a and 220b of different positions. According to an embodiment, the first contact point 211a of the first lens 211 may be in contact the portion 220a of the lens barrel 220 oriented in the Z direction, and the second contact point 211b of the first lens 211 may be in contact with the portion 220b of the lens barrel 220 oriented in a direction substantially perpendicular to the Z direction (e.g., the X direction). According to an embodiment, the first contact point 211a of the first lens 211 may be formed in the non-effective diameter portion of the object-side surface S1 of the first lens 211, and the third contact point 211c of the first lens 211, which is in contact with the second lens 212, may be formed in the non-effective diameter portion of the image-side surface S2 of the first lens 211. According to an embodiment, the second contact point 211b may be formed at the end portion of the rib of the first lens 211. In such a structure, the distances from the optical axis O-I to the first contact point 211a and the third contact point 211c may each be smaller than the distance from the optical axis O-I to the second contact point 211b. In other words, the structure in which the first contact point 211a and the third contact point 211c of the first lens 211 are positioned closer to the optical axis O-I than the second contact point 211b may be provided. The first lens 211 may have a stable contact structure on the protruding barrel space 223 of the lens barrel 220 by being supported through the first contact point 211a, the second contact point 211b, and the third contact point 211c by the inner surface of the lens barrel 220 and the second lens 212.

According to an embodiment, the contact length between the inner surface of the lens barrel (e.g., 220a) and the first contact point 211a of the first lens 211 may be about 0.1 mm or less, the contact length between the inner surface of the lens barrel (e.g., 220b) and the second contact point 211b may be about 0.1 mm or less, and the contact length between the second lens 212 and the third contact point 211c of the first lens 211 may be about 0.1 mm or less. Despite having such short contact lengths at the contact points where the first lens 211 meets the lens barrel 220 and the second lens 212, the first lens 211 may be in stable contact.

According to an embodiment, the second lens 212 may be in contact with the first lens 211 through a fourth contact point 212a, in contact with the inner surface of the lens barrel 220 through a fifth contact point 212b, and in contact with the third lens 213 through a sixth contact point 212c. Here, the fifth contact point 212b may be formed at the greatest outer diameter of the second lens 212. Here, the fourth contact point 212a may be formed in the non-effective diameter portion of the object-side surface S3 of the second lens 212, and the sixth contact point 212c may be formed in the non-effective diameter portion of the image-side surface S4 of the second lens 212. In addition, the distances from the optical axis O-I to the fourth contact point 212a and the sixth contact point 212c may each be smaller than the distance from the optical axis O-I to the fifth contact point 212b. Meanwhile, according to the embodiment illustrated in FIG. 9, the distance from the optical axis O-I to the fourth contact point 212a may be smaller than the distance from the optical axis O-I to the second contact point 212b, and the distance from the optical axis O-I to the sixth contact point 212c may be greater than the distance from the optical axis O-I to the second contact point 212b. Accordingly, based on the second contact point 211b of the first lens 211, which is in contact with the inner surface (e.g., 220b) of the lens barrel 220, the fourth contact point 212a located on the object-side surface S3 of the second lens 212 may be disposed inward (relatively closer to the optical axis O-I), and the sixth contact point 212c located on the image-side surface S4 of the second lens 212 may be disposed outward (relatively farther from the optical axis O-I).

According to the aforementioned embodiments in FIGS. 8 and 9, depending on the design of the first lens 211 and the second lens 212 with such a structure, the camera module 200 according to an embodiment of the disclosure may provide a lens structure which is stably supported and is capable of forming a large FOV (e.g., an ultra-wide FOV of about 100 degrees or more), while reducing the size of the head portion 221 of the lens barrel 220.

Meanwhile, the camera module 200 of the disclosure may include other lenses (e.g., the third lens 213) in addition to the first lens 211 and the second lens 212, and the inner surface of the lens barrel 220 may also have a shape corresponding to the other lenses. For example, the third lens 213 may be in contact with the second lens 212 through a seventh contact point 213a and in contact with another portion 220d of the lens barrel 220 through an eighth contact point 213b. However, detailed descriptions of the third lens 213 and the lens barrel 220 will be omitted below.

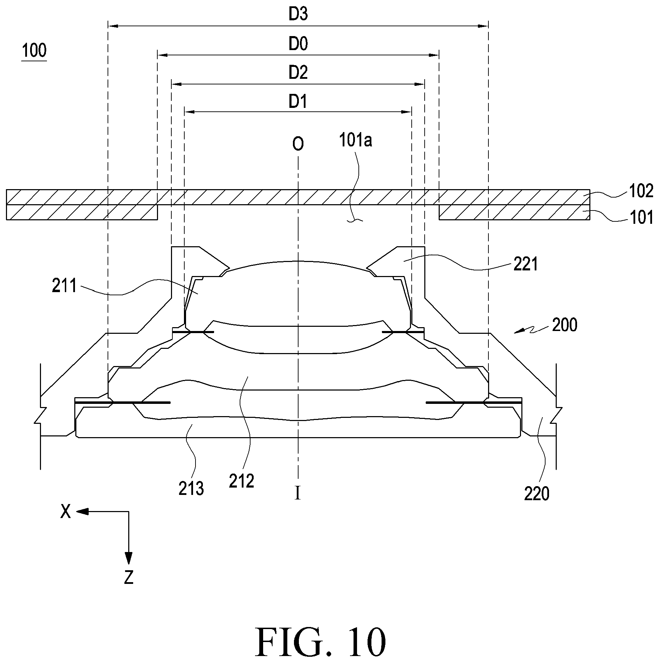

FIG. 10 is a view illustrating the arrangement relationship between a camera hole and a camera module according to an embodiment of the disclosure.

Referring to FIGS. 8 to 10, the outer diameter D1 of the first nearest lens from the object-side O (e.g., the first lens 211), including its rib, may be smaller than the outer diameter D2 of the head portion 221 of the lens barrel 220. Moreover, the outer diameter D2 of the head portion 221 of the lens barrel 220 may be smaller than the outer diameter D3, including the rib of the second nearest lens from the object-side O (e.g., the second lens 212). The diameter D0 of at least one camera hole 101a of the camera module 200 may be greater than the outer diameter D2 of the head portion of the lens barrel and smaller than the outer diameter D3 including the rib of the second nearest lens from the object-side (e.g., the second lens 212).

That is, according to FIG. 10, the camera module may include elements expressed by the following Equation 10.

$$[\text{Equation 10}]$$
$$D1 < D2 < D0 < D3$$

According to an embodiment of the disclosure, in order to implement a large-screen display, it is possible to physically reduce the outer diameter of the lens barrel of a camera module without adding components or changing processes, while ensuring the impact resistance and optical performance of lenses.

An embodiment of the disclosure may provide an electronic device 100 including a front plate 102, a display panel 101 laminated on a rear surface of the front plate 102 and including at least one camera hole 101a, and a camera module 200. The camera may include a lens barrel 220 including a head portion 221 protruding toward the front plate, an optical opening (O.O.) surrounded by the head portion 221, and a protruding barrel space 223, and plurality of lenses 210 aligned along an optical axis O-I within the lens barrel. Among the plurality of lenses included in the camera module, the first nearest lens from an object-side (e.g., the first lens 211) may be disposed within the protruding barrel space 223, and an outer diameter D1 of the first nearest lens from the object-side (e.g., the first lens 211) including a rib may be smaller than the outer diameter D2 of the head portion of the lens barrel.

According to an embodiment, the outer diameter D2 of the head portion of the lens barrel may be smaller than an outer diameter D3 including a rib of the second nearest lens from the object-side (e.g., the second lens 212).

According to an embodiment, the diameter D0 of the at least one camera hole 101a may be greater than the outer diameter D2 of the head portion of the lens barrel and smaller than the outer diameter D3 including the rib of the second nearest lens from the object-side (e.g., the second lens 212).

According to an embodiment, the first nearest lens from the object-side (e.g., the first lens 211) may be in contact with an inner surface of the lens barrel through a first contact point 211a and a second contact point 211b, and in contact with the second nearest lens from the object-side (e.g., the second lens 212) through a third contact point 211c.

According to an embodiment, the second contact point 211b may be formed at the largest outer diameter of the first nearest lens from the object-side (e.g., the first lens 211).

According to an embodiment, the first contact point 211a may be formed in a non-effective diameter portion of an object-side surface of the first nearest lens from the object-side (e.g., the first lens 211), and the third contact point 211c may be formed in a non-effective diameter portion of an upper surface of the first nearest lens from the object-side (e.g., the first lens 211).

According to an embodiment, the distances from the optical axis to the first contact point 211a and the third contact point 211c may each be smaller than the distance from the optical axis to the second contact point 211b.

According to an embodiment, a contact length between an inner surface of the lens barrel and the first contact point 211a of the first nearest lens from the object-side (e.g., the first lens 211) may be about 0.1 mm or less, a contact length between the inner surface of the lens barrel and the second contact point 211b may be about 0.1 mm or less, and a contact length between the second nearest lens from the object-side (e.g., the second lens 212) and the third contact point 211c may be about 0.1 mm or less.

According to an embodiment, the second nearest lens from the object-side (e.g., the second lens 212) is in contact with the first nearest lens from the object-side (e.g., first lens 211), in contact with the inner surface of the lens barrel, and in contact with a third nearest lens from the object-side (e.g., the third lens 213).

According to an embodiment, the second nearest lens from the object-side (e.g., the second lens 212) is in contact with the first nearest lens from the object-side (e.g., the first lens 211) through the fourth contact point 212a at a position adjacent to the protruding barrel space in the lens barrel, in contact with the inner surface of the lens barrel through a fifth contact point 212b, and in contact with the third nearest lens from the object-side (e.g., the third lens 213) through a sixth contact point 212c.

According to an embodiment, the fifth contact point 212b may be formed at the largest outer diameter of the second nearest lens from the object-side (e.g., the second lens 212).

According to an embodiment, the fourth contact point 212a may be formed in a non-effective diameter portion of the object-side surface of the second nearest lens from the object-side (e.g., the second lens 212), and the sixth contact point 211c may be formed in a non-effective diameter portion of an upper surface of the second nearest lens from the object-side (e.g., the second lens 212).

According to an embodiment, the distances from the optical axis to the fourth contact point 212a and the sixth contact point 212c may each be smaller than the distance from the optical axis to the fifth contact point 212b.

According to an embodiment, the distance from the optical axis to the fourth contact point 212a may be smaller than the distance from the optical axis to the second contact point 211b, and the distance from the optical axis to the sixth contact point 212c is greater than the distance from the optical axis to the second contact point 211b.

According to an embodiment, the FOV of the camera module may be 90 degrees or greater.

An embodiment of the disclosure may provide an electronic device 100 including a front plate 102, a display panel 101 laminated on a rear surface of the front plate 102 and including at least one camera hole 101a, and a camera module 200. The camera may include a lens barrel 220 including a head portion 221 protruding toward the front plate, an optical opening (O.O.) surrounded by the head portion 221, and a protruding barrel space 223, and plurality of lenses 210 aligned along an optical axis **O-I** within the lens barrel. The first nearest lens from the object-side (e.g., the first lens 211) may be in contact with an inner surface of the lens barrel through a first contact point 211a and a second contact point 211b, and in contact with the second nearest lens from the object-side (e.g., the second lens 212) through a third contact point 211c. The second nearest lens from the object-side (e.g., the second lens 212) is in contact with the first nearest lens from the object-side (e.g., the first lens 211) through a fourth contact point 212a, in contact with the inner surface of the lens barrel through a fifth contact point 212b, and in contact with the third nearest lens from the object-side (e.g., the third lens 213) through a sixth contact point 212c. The distances from the optical axis to the first contact point 211a and the third contact point 211c may each be smaller than the distance from the optical axis to the second contact point 211b, the distance from the optical axis to the fourth contact point 212a may be smaller than the distance from the optical axis to the second contact point 211b, and the distance from the optical axis to the sixth contact point 212c may be greater than the distance from the optical axis to the second contact point 211b.

According to an embodiment, among the plurality of lenses included in the camera module, the first nearest lens from an object-side (e.g., the first lens 211) may be disposed within the protruding barrel space 223, and an outer diameter D1 of the first lens to closet to the object-side (e.g., the first lens 211) including a rib may be smaller than the outer diameter D2 of the head portion of the lens barrel.

According to an embodiment, the outer diameter D2 of the head portion of the lens barrel may be smaller than an outer diameter D3 including a rib of the second nearest lens from the object-side (e.g., the second lens 212).

According to an embodiment, the diameter D0 of the at least one camera hole 101a may be greater than the outer diameter D2 of the head portion of the lens barrel and smaller than the outer diameter D3 including the rib of the second nearest lens from the object-side (e.g., the second lens 212).

According to an embodiment, the FOV of the camera module may be 90 degrees or greater.

In the detailed description of the embodiments of the disclosure, specific embodiments have been described. However, it will be evident to a person ordinarily skilled in the art that various modification can be made without departing from the gist of the disclosure. For example, in specific embodiments of the disclosure, the dimensions of the plurality of lenses and the like may be appropriately set depending on the structures and required specifications of the camera module and the electronic device to be actually manufactured, and the actual use environment.

**Claims**

1. An electronic device comprising:

   a front plate (102);
   a display panel (101) laminated on a rear surface of the front plate (102) and including at least one camera hole (101a); and
   a camera module (200) including: a lens barrel (220) including a head portion (221) protruding toward the front plate, an optical opening (O.O.) surrounded by the head portion (221), and a protruding barrel space (223); and
   a plurality of lenses (210) aligned along an optical axis (O-I) within the lens barrel,
   wherein, among the plurality of lenses included in the camera module, a first nearest lens from an object-side (e.g., the first lens (211)) is disposed within the protruding barrel space (223), and
   wherein an outer diameter (D1) including a rib of the first nearest lens from the object-side (e.g., the first lens (211)) is smaller than an outer diameter (D2) of the head portion of the lens barrel.

2. The electronic device of claim 1, wherein the outer diameter (D2) of the head portion of the lens barrel is smaller than an outer diameter (D3) including a rib of a second nearest lens from the object-side (e.g., the second lens 212).

3. The electronic device of claim 1 or 2, wherein the at least one camera hole (101a) has a diameter (D0) greater than the outer diameter (D2) of the head portion of the lens barrel and smaller than the outer diameter (D3) including the rib of the second nearest lens from the object-side (e.g., the second lens 212).

4. The electronic device of one of claims 1 to 3, wherein the first nearest lens from the object-side (e.g., the first lens (211)) is in contact with an inner surface of the lens barrel through a first contact point (211a) and a second contact point (211b), and in contact with the second nearest lens from the object-side (e.g., the second lens (212)) through a third contact point (211c).

5. The electronic device of claim 4, wherein the second contact point (211b) is formed at a largest outer diameter of the first nearest lens from the object-side (e.g., the first lens (211)).

6. The electronic device of claim 4 or 5, wherein the first contact point (211a) is formed in a non-effective diameter portion of an object-side surface of the first nearest lens from the object-side (e.g., the first lens (211)), and
   wherein the third contact point (211c) is formed in a non-effective diameter portion of an upper surface of the first nearest lens from the object-side (e.g., the first lens (211)).

7. The electronic device of one of claims 4 to 6, wherein distances from the optical axis to the first contact point (211a) and the third contact point (211c) are each smaller than a distance from the optical axis to the second contact point (211b).

8. The electronic device of one of claims 4 to 7, wherein a contact length between an inner surface of the lens barrel and the first contact point (211a) of the first nearest lens from the object-side (e.g., the first lens (211)) is about 0.1 mm or less, a contact length between the inner surface of the lens barrel and the second contact point (211b) is about 0.1 mm or less, and a contact length between the second nearest lens from the object-side (e.g., the second lens (212)) and the third contact point (211c) is about 0.1 mm or less.

9. The electronic device of one of claims 1 to 8, wherein the second nearest lens from the object-side (e.g., the second lens (212)) is in contact with the first nearest lens from the object-side (e.g., the first lens (211)), in contact with the inner surface of the lens barrel, and in contact with a third nearest lens from the object-side (e.g., the third lens (213)).

10. The electronic device of claim 9, wherein the second nearest lens from the object-side (e.g., the second lens (212)) is in contact with the first nearest lens from the object-side (e.g., the first lens (211)) through a fourth contact point (212a) at a position adjacent to the protruding barrel space in the lens barrel, in contact with the inner surface of the lens barrel through a fifth contact point (212b), and in contact with the third nearest lens from the object-side (e.g., the third lens (213)) through a sixth contact point (212c).

11. The electronic device of claim 10, wherein the fifth contact point (212b) is formed at a largest outer diameter of the second nearest lens from the object-side (e.g., the second lens (212)).

12. The electronic device of claim 10 or 11, wherein the fourth contact point (212a) is formed in a non-effective diameter portion of an object-side surface of the second nearest lens from the object-side (e.g., the second lens (212)), and
wherein the sixth contact point (211c) is formed in a non-effective diameter portion of an upper surface of the second nearest lens from the object-side (e.g., the second lens (212)).

13. The electronic device of one of claims 10 to 12, wherein distances from the optical axis to the fourth contact point (212a) and the sixth contact point (212c) are each smaller than a distance from the optical axis to the fifth contact point (212b).

14. The electronic device of one of claims 10 to 12, wherein a distance from the optical axis to the fourth contact point (212a) is smaller than a distance from the optical axis to the second contact point (211b), and a distance from the optical axis to the sixth contact point (212c) is greater than the distance from the optical axis to the second contact point (211b).

15. The electronic device of one of claims 1 to 14, wherein a field of view (FOV) of the camera module is 90 degrees or greater.

FIG. 1

FIG. 2

FIG. 3

FIG. 4

FIG. 5

FIG. 6

**FIG. 7**

FIG. 8

FIG. 9

FIG. 10

## INTERNATIONAL SEARCH REPORT

| International application No. |
| --- |
| **PCT/KR2023/014799** |

| A. | CLASSIFICATION OF SUBJECT MATTER |
| --- | --- |

**H04N 23/55**(2023.01)i; **H04N 23/57**(2023.01)i; **G03B 17/12**(2006.01)i; **G03B 30/00**(2021.01)i; **G02B 7/02**(2006.01)i; **G02B 13/00**(2006.01)i; **H04N 23/51**(2023.01)i; **G03B 17/08**(2006.01)i

According to International Patent Classification (IPC) or to both national classification and IPC

| B. | FIELDS SEARCHED |
| --- | --- |

Minimum documentation searched (classification system followed by classification symbols)

H04N 23/55(2023.01); G02B 27/00(2006.01); G02B 7/02(2006.01); G03B 13/32(2006.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 언더 디스플레이(under display), 카메라 홀(camera hole), 렌즈 배럴(lens barrel), 상단(top surface), 돌출(protrusion), 렌즈(lens), 외경(outer diameter)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 209821470 U (OPPO GUANGDONG MOBILE COMMUNICATIONS CO., LTD.) 20 December 2019 (2019-12-20) See paragraphs [0033]-[0035] and [0047]; claim 1; and figures 1 and 3-4. | 1,3,15 |
| Y | | 2,4-14 |
| Y | JP 2010-217280 A (RICOH CO., LTD.) 30 September 2010 (2010-09-30) See paragraph [0011]. | 2,4-14 |
| Y | KR 10-2008-0063593 A (SAMSUNG ELECTRO-MECHANICS CO., LTD.) 07 July 2008 (2008-07-07) See paragraph [0032]. | 6,12 |
| A | KR 10-2012-0028073 A (LG INNOTEK CO., LTD.) 22 March 2012 (2012-03-22) See paragraphs [0009]-[0013]. | 1-15 |

✓ Further documents are listed in the continuation of Box C.    ✓ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 December 2023** | **27 December 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/014799** |

**C.     DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0028369 A (SAMSUNG ELECTRO-MECHANICS CO., LTD.) 16 March 2020 (2020-03-16)<br>See paragraphs [0007]-[0011]. | 1-15 |

Form PCT/ISA/210 (second sheet) (July 2022)

## INTERNATIONAL SEARCH REPORT
### Information on patent family members

International application No.

**PCT/KR2023/014799**

| Patent document cited in search report | | | Publication date (day/month/year) | Patent family member(s) | | | Publication date (day/month/year) |
|---|---|---|---|---|---|---|---|
| CN | 209821470 | U | 20 December 2019 | None | | | |
| JP | 2010-217280 | A | 30 September 2010 | None | | | |
| KR | 10-2008-0063593 | A | 07 July 2008 | None | | | |
| KR | 10-2012-0028073 | A | 22 March 2012 | KR | 10-1134048 | B1 | 13 April 2012 |
| KR | 10-2020-0028369 | A | 16 March 2020 | CN | 110542987 | A | 06 December 2019 |
| | | | | CN | 110542987 | B | 26 August 2022 |
| | | | | CN | 115220193 | A | 21 October 2022 |
| | | | | CN | 115220194 | A | 21 October 2022 |
| | | | | CN | 210376832 | U | 21 April 2020 |
| | | | | KR | 10-2019-0135894 | A | 09 December 2019 |
| | | | | KR | 10-2022-0098332 | A | 12 July 2022 |
| | | | | KR | 10-2023-0068369 | A | 17 May 2023 |
| | | | | KR | 10-2087983 | B1 | 11 March 2020 |
| | | | | KR | 10-2416101 | B1 | 06 July 2022 |
| | | | | US | 11009678 | B2 | 18 May 2021 |
| | | | | US | 2019-0369359 | A1 | 05 December 2019 |
| | | | | US | 2021-0223508 | A1 | 22 July 2021 |

Form PCT/ISA/210 (patent family annex) (July 2022)